# DEMANDE DE BREVET EUROPEEN

(11) **EP 2 666 916 A1**
(43) Date de publication de la demande: **27.11.2013**
(21) Numéro de dépôt: 13168028.2
(22) Date de dépôt: 16.05.2013
(51) Int. Cl.: E03D 1/00, E03D 5/00, E03D 11/02

(54) **Ensemble sanitaire comprenant un dispositif de récupération des eaux usées provenant d'une table vasque**

(30) Priorité: 23.05.2012 FR 1254688
(71) Demandeur: Lecico France, 51300 Vitry-Le-Francois (FR)
(72) Inventeur: Sakr, Chaker, 51100 Reims (FR)
(74) Mandataire: Deschamps, Samuel

(57) **Abrégé**

L'invention concerne un ensemble sanitaire (10) comprenant un réservoir (15) comportant un mécanisme de vidange (30), notamment pour une chasse d'eau, et une table vasque (21) comprenant une arrivée d'eau et une sortie d'écoulement des eaux usées, dans lequel le réservoir comporte un compartiment (31) délimitant un volume à l'intérieur du réservoir (15), ce compartiment (31) étant en communication hydraulique avec la sortie d'écoulement de la table vasque (21), et des moyens de vidange aptes à établir une communication hydraulique entre le compartiment (31) et le réservoir (15), les moyens de vidange étant commandés par le mécanisme de vidange (30).

## Description

**DOMAINE TECHNIQUE DE L'INVENTION**

L'invention concerne un ensemble sanitaire comprenant un dispositif de récupération des eaux usées provenant d'une table vasque.

On entend par « table de vasque », un dispositif de récupération des eaux usées également appelé lavabo ou lave-main.

L'invention concerne plus particulièrement un ensemble sanitaire comportant une table vasque reliée à un réservoir de chasse d'eau.

**ETAT DE LA TECHNIQUE**

Selon l'art antérieur, un ensemble sanitaire intégré comporte une cuvette de toilette et un réservoir de chasse d'eau sur lequel un mini-lavabo est disposé pour permettre de se laver les mains. L'eau usée évacuée par le mini-lavabo permet d'alimenter le remplissage du réservoir.

La position du mini-lavabo sur le réservoir de chasse d'eau de ce dispositif de l'art antérieur rend son accès difficile notamment aux personnes handicapées.

De plus, pour ce type d'ensemble sanitaire, l'utilisateur doit se laver les mains immédiatement après avoir activé la chasse d'eau afin que l'eau usée participe au remplissage du réservoir juste après la vidange de celui-ci. Cette contrainte limite le volume d'eau économisé par ce dispositif de l'art antérieur.

Afin d'inciter l'utilisateur à se laver les mains directement après avoir actionné la chasse d'eau, certains dispositifs de l'art antérieur comportent un actionnement automatique d'un robinet du mini-lavabo. Ces dispositifs ne permettent pas à l'utilisateur de contrôler le débit et l'instant d'arrêt de l'écoulement de l'eau.

**OBJET DE L'INVENTION**

L'invention concerne un ensemble sanitaire comprenant un réservoir comportant un mécanisme de vidange, notamment pour une chasse d'eau, et une table vasque comprenant une arrivée d'eau et une sortie d'écoulement des eaux usées, dans lequel le réservoir comporte un compartiment délimitant un volume à l'intérieur du réservoir, ce compartiment étant en communication hydraulique avec la sortie d'écoulement de la table vasque, et des moyens de vidange aptes à établir une communication hydraulique entre le compartiment et le réservoir, les moyens de vidange étant commandés par le mécanisme de vidange.

Ainsi, l'ensemble sanitaire permet de récupérer l'eau usée de la table vasque quel que soit l'état de remplissage du réservoir. Le dispositif objet de l'invention permet de déporter la position de la table vasque par rapport à la position du réservoir. En variante, la table vasque peut être disposée sur le réservoir comme un dispositif de lave-main classique.

De plus, l'arrivée d'eau de la table vasque est indépendante de l'activation de la chasse d'eau. Le débit n'est pas limité et l'utilisateur peut sans contraintes manipuler un robinet de la table vasque, il n'a pas besoin de se laver les mains directement après l'activation de la chasse d'eau et il peut ainsi prendre le temps de se rhabiller.

Avantageusement, la communication hydraulique entre la table vasque et le compartiment est réalisée par une canalisation traversant une lumière du compartiment et débouchant dans le compartiment, la canalisation étant adaptée à soutenir le poids du compartiment. Ainsi, La canalisation est utilisée pour déverser les eaux usées de la table vasque vers ledit compartiment et pour supporter le poids du compartiment.

Avantageusement, le compartiment comporte des moyens de trop plein aptes à mettre en communication hydraulique le compartiment et le réservoir pour un niveau d'eau déterminé dans le compartiment. Ainsi, les eaux usées de la table vasque peuvent toujours être évacuée quel que soit le remplissage du compartiment.

Avantageusement, le réservoir comporte une évacuation de trop plein apte à vider le réservoir vers une canalisation d'évacuation pour un niveau d'eau déterminé dans le réservoir. Le trop plein du réservoir provenant d'un trop plein du compartiment peut ainsi être évacué vers une canalisation d'évacuation, par exemple un tout à l'égout ou une fosse septique.

Avantageusement, les moyens de vidange comprennent un clapet comportant un flotteur mobile en translation dans un corps entre une position d'obturation et une position d'écoulement, le flotteur comportant un obturateur obturant de manière étanche la communication hydraulique entre le compartiment et le réservoir lorsque le flotteur est dans la position d'obturation. Le clapet permet de vider le compartiment lorsque la chasse d'eau est actionnée et que le niveau de l'eau du réservoir varie. La variation du niveau de l'eau du réservoir entraine ainsi le déplacement du flotteur vers la position d'écoulement.

Avantageusement, le corps est fixé sur le compartiment par un moyen de fixation comprenant un anneau dont un bord de contact est fixé avec le corps, et un montant annulaire, fixé sur la paroi interne de l'anneau, s'étendant axialement dans la direction du compartiment, le montant annulaire comportant une partie filetée apte à coopérer avec un écrou disposé dans le compartiment. Le moyen de fixation du clapet par l'écrou vissé sur la partie filetée du montant annulaire permet le montage et le démontage du clapet lors d'une étape de contrôle ou de remplacement.

Avantageusement, l'obturateur est un joint en forme de flasque circulaire apte à venir en appui contre le bord de contact lorsque le flotteur est dans la position d'obturation.

Avantageusement, la table vasque est déportée par rapport à la position du réservoir. La table vasque peut ainsi être adaptée pour une personne handicapée qui est très incommodée par les tables vasques disposées sur le réservoir.

Avantageusement, la table de vasque s'étend dans la direction longitudinal du couvercle jusqu'au niveau du couvercle. L'ensemble sanitaire présente ainsi une continuité des éléments.

Avantageusement, le couvercle et la table de vasque forme une seule et même pièce, préférentiellement réalisée en céramique. L'ensemble sanitaire forme un bloc complet, dit également bloc sanitaire, facilitant le montage et l'installation.

**BREVE DESCRIPTION DES FIGURES**

D'autres avantages, buts et caractéristiques de l'invention ressortiront de la description qui va suivre, faite dans un but explicatif et nullement limitatif en regard des dessins annexés. Ces dessins montrent :

Figure 1 : une vue en perspective du coté gauche d'un ensemble sanitaire monté dans une salle de toilette handicapé ou non selon un mode de réalisation de l'invention ;

Figure 2 : une représentation schématique en perspective et en transparence du coté droit de l'ensemble sanitaire de la Figure 1 ;

Figure 3: une représentation schématique de face du compartiment de l'ensemble sanitaire de la Figure 1 ;

Figure 4 : une représentation schématique en perspective et en coupe du réservoir de l'ensemble sanitaire de la Figure 1 ;

Figure 5 : une représentation schématique de face et en coupe du clapet de l'ensemble sanitaire de la Figure 1 ; et

Figure 6 : une représentation schématique éclatée en perspective du clapet de l'ensemble sanitaire de la Figure 1.

Les éléments identiques, similaires ou analogues, conservent les mêmes références d'une figure à l'autre.

**DESCRIPTION D'EXEMPLES DE REALISATION DE L'INVENTION**

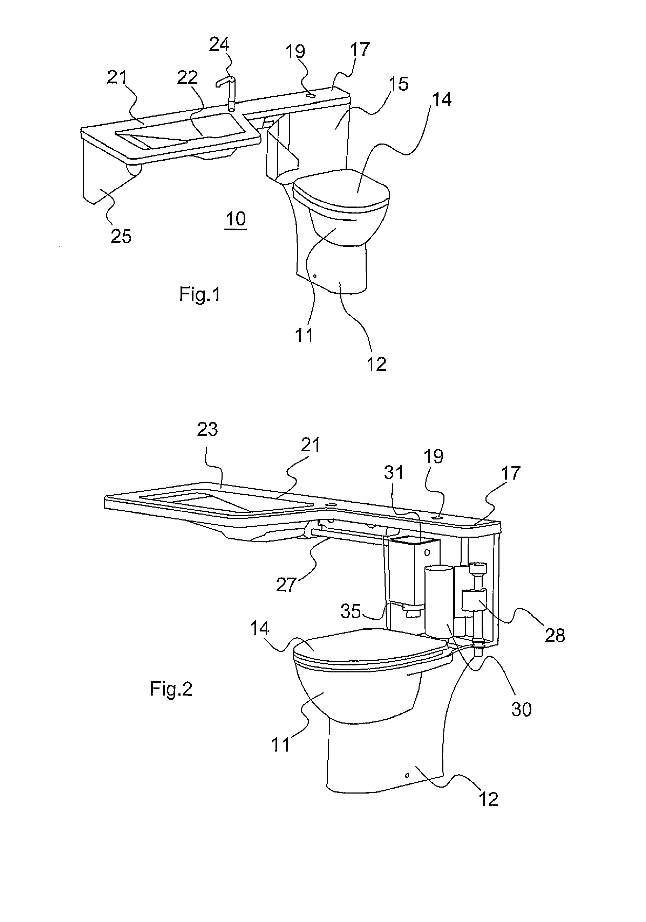

Les Figures 1 et 2 montrent un ensemble sanitaire 10 comprenant une table vasque 21 juxtaposée à une cuvette 11 de toilette alimentée par un réservoir 15. La cuvette 11 est surélevée par rapport au sol par un montant 12 sur lequel le réservoir 15 est posé. Un abattant 14, bien connu de l'homme du métier, est fixé sur la cuvette 11. Le réservoir 15 comporte un couvercle 17 sur lequel est fixée la commande d'une chasse d'eau 19 permettant de vider dans la cuvette 11 une quantité d'eau contenue dans le réservoir 15. La contenance du réservoir 15 est comprise entre un et cinq litres. De préférence, la contenance du réservoir 15 est comprise entre deux et quatre litres.

La table vasque 21 comporte un robinet 24 relié à une arrivé d'eau. L'eau coulant du robinet 24 est destinée à être recueillie dans un cache bonde 22 et acheminée vers une sortie d'écoulement des eaux usées placée sous le cache bonde 22. Le cache bonde 22 est fixé dans une table de vasque 21 s'étendant dans la direction longitudinale du couvercle 17 jusqu'au niveau du couvercle 17. De préférence, le couvercle 17 et la table de vasque 21 forment une seule et même pièce. Encore plus préférentiellement, le couvercle 17, la table de vasque 21 forment une seule et même pièce.

La cuvette 11, le montant 12, le réservoir 15, la table de vasque 21, le cache bonde 22 et le couvercle 17 sont préférentiellement réalisés en céramique pour répondre aux contraintes de propreté des ensembles sanitaires.

La Figure 1 montre l'ensemble sanitaire 10 monté dans une salle de toilette. La table de vasque 21 est fixée sur un mur par une équerre 25 et est disposée à proximité de ladite cuvette 11 pour aider les personnes handicapées à monter et descendre de la cuvette 11 notamment depuis un fauteuil roulant. La cuvette 11 est positionnée à une hauteur comprise entre 400 et 500 mm du sol, préférentiellement à une hauteur de 450 mm. La table de vasque 21 est fixée à une hauteur comprise entre 850 et 900 mm du sol, préférentiellement à une hauteur de 845 mm. L'ensemble formé par la table de vasque 21 et le couvercle 17 s'étend sur une longueur comprise entre 1200 et 1400 mm, préférentiellement sur une longueur de 1300 mm. Ces contraintes de positionnement de l'ensemble sanitaire 10 assurent une zone de manoeuvre nécessaire pour les personnes handicapées tout en leurs permettant d'utiliser la table vasque 21 et la cuvette 11.

La Figure 2 montre que la sortie d'écoulement des eaux usées de la table vasque 21 est reliée par une canalisation 27 à un compartiment 31 disposé à l'intérieur du réservoir 15. Le réservoir 15 comporte également une arrivée d'eau, traversant une lumière 52 dudit réservoir 15, munie d'un flotteur 28 apte à remplir le réservoir 15 et un mécanisme de vidange 30 de la chasse d'eau placé sur une ouverture 53 reliant le réservoir 15 à la cuvette 11.

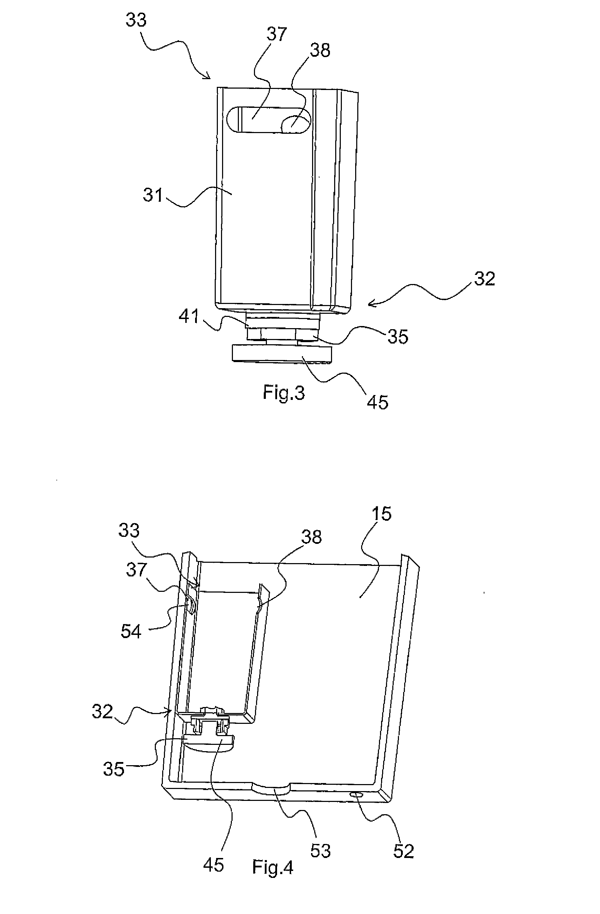

La Figure 3 montre que le compartiment 31 présente une base sensiblement rectangulaire aux bords de laquelle s'élèvent quatre bords droits. Le compartiment 31 s'étend entre une première extrémité 32 au niveau de la base et une deuxième extrémité 33 opposée à la première extrémité. Au niveau de la base, le compartiment 31 est muni d'un clapet 35 apte à vider l'eau usée contenue dans le compartiment 31 lorsque la chasse d'eau est actionnée.

Le compartiment 31 comporte une lumière 37 de forme oblongue ménagée sur un bord du compartiment 31 proche de l'extrémité 33. La Figure 4 montre que la lumière 37 est positionnée face à une lumière 54 de forme circulaire ménagée sur un bord du réservoir 15. La section de la lumière 54 est adaptée avec la section de la canalisation 27 de sorte que la canalisation 27 traverse la lumière 54 du réservoir 15, puis la lumière 37 du compartiment 31 pour déboucher dans le réservoir 15. La section de la canalisation 27 est également adaptée à soutenir le poids du compartiment 31 dans le réservoir 15.

Le compartiment 31 comporte des moyens de trop plein aptes à mettre en communication hydraulique le compartiment 31 et le réservoir 15 pour un niveau d'eau déterminé dans le compartiment 31. Les moyens de trop plein sont réalisés par une lumière 38 de forme circulaire ménagée sur un autre bord du compartiment 31 proche de l'extrémité 33. Le réservoir 15 comporte également une évacuation de trop plein apte à vider le réservoir 15 vers une canalisation d'évacuation pour un niveau d'eau déterminé dans le réservoir 15.

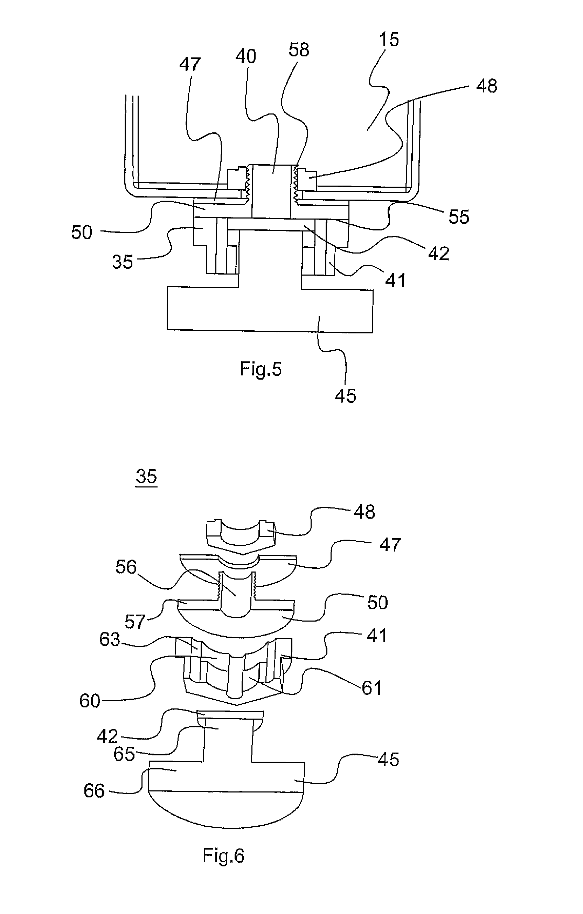

Les Figures 5 et 6 montrent un clapet 35 apte à obturer de manière étanche une communication hydraulique 40 entre le compartiment 31 et le réservoir 15. Le clapet 35 comprend un flotteur 45 mobile en translation dans un corps 41 entre une position d'écoulement et une position d'obturation. Le flotteur 45 comporte un obturateur 42 obturant de manière étanche la communication hydraulique 40 entre le compartiment 31 et le réservoir 15 lorsque le flotteur 45 est dans la position d'obturation.

Le corps 41 est fixé sur une extrémité 32 du compartiment 31 par un moyen de fixation 50 comprenant un anneau 57 muni d'un bord de contact 55 fixé avec le corps 41 et un montant annulaire 56 fixé sur le paroi interne de l'anneau 57 s'étendant axialement dans la direction du compartiment 31. Le montant annulaire 56 comprend une partie extérieure filetée 58 apte à coopérer avec un écrou 48 disposé dans le compartiment 31. L'écrou 48 comporte une surface extérieure hexagonale pour permettre à un opérateur de disposer un outil lors de la fixation du clapet 35. Un joint 57 est positionné entre le moyen de fixation 50 et le compartiment 31 pour garantir l'étanchéité du compartiment 31.

Le corps 41 comporte une chambre d'écoulement 60 communiquant avec le compartiment 31 et une chambre de guidage 61 communiquant avec la chambre d'écoulement 60. Au niveau de la chambre d'écoulement 60, le corps 41 présente une forme extérieure cylindrique tandis qu'au niveau de ladite chambre de guidage 61, le corps 41 présente une forme extérieure hexagonale adaptée à positionner une clé pour le serrage du clapet 35 lors du montage ou du démontage. Le corps 41 comporte également un canal périphérique 63 autour des chambres d'écoulement 60 et de guidage 61.

Le flotteur 45 comporte une première section cylindre 65 reliée à une deuxième section cylindrique 66 de plus grand diamètre. La première section cylindrique 65 est adaptée à la chambre de guidage 61 pour guider les déplacements en translation du flotteur 45 suivant la direction axial du corps 41. La deuxième section cylindrique 66 est réalisée pour assurer la flottaison du flotteur 45.

La première section cylindrique 65 du flotteur 45 est surmontée par un obturateur 42 apte à obturer l'ouverture d'écoulement 40 lors ledit flotteur 45 est dans la position d'obturation. Lorsque ledit flotteur 45 est dans la position d'écoulement, l'obturateur 42 est placé contre une face de la chambre de guidage 61 et l'eau circule depuis ledit compartiment 31 vers le réservoir 15 en passant par le canal périphérique 63. L'obturateur 42 est préférentiellement un joint en forme de flasque circulaire.

L'invention permet ainsi de récupérer l'eau d'une table vasque, lavabo ou lave-main pour alimenter en partie une chasse d'eau et ainsi d'économiser près de la moitié de l'eau nécessaire à une chasse d'eau. De plus, l'ensemble sanitaire est adapté pour tous, notamment les personnes handicapées.

## Revendications

1. Ensemble sanitaire (10) comprenant :
- un réservoir (15) comportant un mécanisme de vidange (30), notamment pour une chasse d'eau, et
- une table vasque (21) comprenant une arrivée d'eau et une sortie d'écoulement des eaux usées,
**caractérisé en ce que** le réservoir comporte :
- un compartiment (31) délimitant un volume à l'intérieur du réservoir (15), ce compartiment (31) étant en communication hydraulique avec la sortie d'écoulement de la table vasque (21), et
- des moyens de vidange aptes à établir une communication hydraulique (40) entre le compartiment (31) et le réservoir (15), les moyens de vidange étant commandés par le mécanisme de vidange (30).

2. Ensemble sanitaire selon la revendication 1, caractérisé en ce la communication hydraulique entre la table vasque (21) et le compartiment (31) est réalisée par une canalisation (27) traversant une lumière (37) du compartiment (31) et débouchant dans le compartiment (31), la canalisation (27) étant adaptée à soutenir le poids du compartiment (31).

3. Ensemble sanitaire selon la revendication 1 ou 2, **caractérisé en ce que** le compartiment (31) comporte des moyens de trop plein aptes à mettre en communication hydraulique le compartiment (31) et le réservoir (15) pour un niveau d'eau déterminé dans le compartiment (31).

4. Ensemble sanitaire selon l'une des revendications 1 à 3, **caractérisé en ce que** le réservoir (15) comporte une évacuation de trop plein apte à vider le réservoir (15) vers une canalisation d'évacuation pour un niveau d'eau déterminé dans le réservoir (15).

5. Ensemble sanitaire selon l'une des revendications 1 à 4, **caractérisé en ce que** les moyens de vidange comprennent un clapet (35) comportant un flotteur (45) mobile en translation dans un corps (41) entre une position d'obturation et une position d'écoulement, le flotteur (45) comportant un obturateur (42) obturant de manière étanche la communication hydraulique (40) entre le compartiment (31) et le réservoir (15) lorsque le flotteur (45) est dans la position d'obturation.

6. Ensemble sanitaire selon la revendication 5, **caractérisé en ce que** le corps (41) est fixé sur le compartiment (31) par un moyen de fixation (50) comprenant :
- un anneau (57) dont un bord de contact (55) est fixé avec le corps (41), et
- un montant annulaire (56), fixé sur la paroi interne de l'anneau (57), s'étendant axialement dans la direction du compartiment (31),
- le montant annulaire (56) comportant une partie filetée (58) apte à coopérer avec un écrou (48) disposé dans le compartiment (31).

7. Ensemble sanitaire selon la revendication 6, **caractérisé en ce que** l'obturateur (42) est un joint en forme de flasque circulaire apte à venir en appui contre le bord de contact (55) lorsque le flotteur (45) est dans la position d'obturation.

8. Ensemble sanitaire selon l'une des revendications 1 à 7, **caractérisé en ce que** la table vasque (21) est déportée par rapport à la position du réservoir (15).

9. Ensemble sanitaire selon la revendication 8, **caractérisé en ce que** la table vasque (21) s'étendant dans la direction longitudinal du couvercle (17) jusqu'au niveau du couvercle (17).

10. Ensemble sanitaire selon la revendication 9, **caractérisé en ce que** le couvercle (17) et la table vasque (21) forme une seule et même pièce, préférentiellement réalisée en céramique.
